# EUROPEAN PATENT APPLICATION

(11) **EP 3 174 370 A1**
(43) Date of publication of application: **31.05.2017**
(21) Application number: 16197915.8
(22) Date of filing: 09.11.2016
(51) Int. Cl.: H05B 6/62, A47J 37/12, A23L 5/10, A47J 27/00

(54) **MULTI-FUNCTIONAL RF CAPACITIVE HEATING FOOD PREPARATION DEVICE**

(30) Priority: 24.11.2015 US 201514950783
(71) Applicant: Illinois Tool Works Inc., Glenview, IL 60025 (US)
(72) Inventor: LINTON, Joshua M., Glenview, IL 60025 (US); GRIMALDI, Giorgio, Glenview, IL 60025 (US)
(74) Representative: Trinks, Ole

(57) **Abstract**

A food preparation device may include a radio frequency (RF) capacitive heating source, a liquid temperature control assembly, a cooking controller operably coupled to the RF capacitive heating source and the liquid temperature control assembly, a basin configured to contain a liquid and receive a food product, and a lid hingedly attached to the basin. The lid may be configured to have a function related to a selected food preparation program. The RF capacitive heating source may include a ground plate and an anode or High Voltage (HV) plate disposed on opposing surfaces of the basin.

## Description

### TECHNICAL FIELD

Example embodiments generally relate to food preparation devices and, more particularly, relate to multi-functional radio frequency (RF) capacitive heating food preparation devices.

### BACKGROUND

Common thawing applications rely on the thermal conduction of heat from the surface to the interior to provide thawing. Due to freshness and product quality constraints, thawing often is done by immersion in water baths that are only slightly above freezing themselves or in refrigerators set to slightly above freezing (e.g., 35°F-40°F). Thawing times are often very long and result in the substantial degradation of food product quality and integrity. With capacitive heating technologies that heat over the entire volume uniformly ("volumetric heating"), thawing can be performed much more rapidly. RF capacitive heating can be used to thaw foods in an ambient environment. However, use of a capacitive RF system in an ambient environment causes the rate at which the surface of a food product thaws to be substantially faster than the rate of thawing at the core of the food product as a result of exposure to the environmental temperature at the surface level but not the core. Accordingly, it may be desirable to achieve an improved food preparation device capable of thawing a food product evenly from surface to core (i.e., "volumetric heating").

Moreover, today's conventional sous vide process is normally done using a thermally non-conductive vessel or basin filled with a liquid. Often attached to a wall inside the basin suspended beneath the surface of the liquid is an immersion circulator that circulates the liquid and regulates the liquid temperature to provide an evenly heated environment. Typically, vacuum sealed bags of food are immersed in the water and left to cook for prolonged periods of time. Although this method achieves high levels of cooking uniformity and food quality, in some cases it can take 96 hours or more to complete. Similarly, braising and pressure cooking provide high levels of cooking uniformity and food quality but also may take extended periods of time to achieve such food quality. Accordingly, it may be desirable to achieve an improved food preparation device capable of rapidly and uniformly cooking a food product such that the food product achieves outstanding food quality.

### BRIEF SUMMARY OF SOME EXAMPLES

Some example embodiments may provide a multi-functional RF capacitive food preparation device. In particular, some example embodiments may provide a food preparation device that provides improved food quality and faster cooking times via, for example, sous vide thawing and cooking, braising, and pressure cooking with an RF capacitive heating source while circulating a liquid and maintaining the liquid temperature. In addition, capacitive RF thawing better preserves the quality of previously frozen food and improves the overall yield of thawed food by mitigating water loss caused by cellular damage during prolonged conventional thawing processes. Moreover, the food preparation device may simplify food preparation by providing various operator-selectable recipes and cycles to further prepare the food product.

In an example embodiment, a food preparation device is provided. The food preparation device may include a radio frequency (RF) capacitive heating source, a liquid temperature control assembly, a cooking controller operably coupled to the RF capacitive heating source and the liquid temperature control assembly, a basin configured to contain a liquid and receive a food product, and a lid hingedly attached to the basin. The lid may be configured to have a function related to a selected food preparation program. The RF capacitive heating source may include a ground plate and a High Voltage (HV) plate disposed on opposing surfaces of the basin.

In another alternative embodiment, a method of preparing food in a food preparation device is provided. The method may include receiving a food product in a basin configured to contain a liquid, initiating a food preparation program in response to an operator selecting the food preparation program on an interface panel, and controlling volumetric thermal conditions of at least one of the food product or the liquid via an RF capacitive heating source and a liquid temperature control assembly according to the food preparation program. The food preparation device may further include a lid hingedly attached to the basin, and the lid may be configured to have a function related to the food preparation program. The RF capacitive heating source may include a ground plate and a High Voltage (HV) plate disposed on opposing surfaces of the basin.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
- FIG. 1A: illustrates a side view of a food preparation device according to an example embodiment;
- FIG. 1B: illustrates a top view of a food preparation device according to an example embodiment;
- FIG. 2A: illustrates a side view of a food preparation device according to an example embodiment;
- FIG. 2B: illustrates a front view of a food preparation device according to an example embodiment;
- FIG. 3: illustrates a functional block diagram of a food preparation device employing at least an RF capacitive heating source and a liquid temperature control assembly according to an example embodiment;
- FIG. 4: illustrates a block diagram of a cooking controller according to an example embodiment;
- FIG. 5: illustrates a control flow diagram of one example of how the cooking controller thaws a food product in accordance with an example embodiment;
- FIG. 6: illustrates a control flow diagram of one example of how the cooking controller sous vide cooks a food product in accordance with an example embodiment;
- FIG. 7: illustrates a control flow diagram of one example of how the cooking controller braises or pressure cooks a food product in accordance with an example embodiment; and
- FIG. 8: illustrates a block diagram of a method of preparing food in a food preparation device in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments may improve the thawing and/or cooking performance of a food preparation device and/or may improve the operator experience of individuals employing an example embodiment. In this regard, some example embodiments may provide for the employment of multiple energy sources to thaw and/or cook a food product via sous vide, braising, and/or pressure cooking.

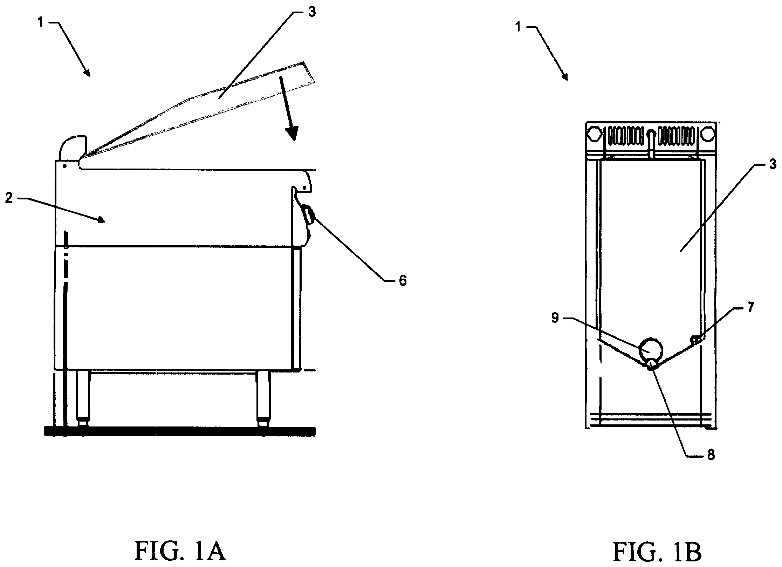

FIGS. 1A and 1B illustrate a food preparation device 1 according to an example embodiment. Specifically, FIG. 1A illustrates a side view of a food preparation device according to an example embodiment, and FIG. 1B illustrates a top view of a food preparation device according to an example embodiment. The food preparation device 1 may be a heating device having sous vide, braising, and pressure cooking capabilities for heating food products, thawing frozen materials, and/or the like. As shown in FIGS. 1A and 1B, the food preparation device 1 may include a basin 2 into which a food product may be placed for the application of energy (e.g., RF capacitive heat, circulated hot or cold liquid and/or the like).

The food preparation device 1 may also include a lid 3 hingedly attached to the basin 2. The lid 3 may be configured to have a function related to an operator-selected food preparation program. For example, the lid 3 may include at least one of a steam release vent 7, a pressure release valve 8, a pressure gauge 9, or any combination thereof. In some embodiments, for example, the lid 3 may be a modular lid that is manually reconfigurable by the user for each of the food preparation programs. In this regard, for instance, a user may be able to add or remove various lid accessories including, but not limited to, the steam release vent 7, the pressure release valve 8, the pressure gauge 9 and/or the like. Alternatively, in other embodiments, for example, the food preparation device 1 may be supplied with a plurality of lids 3, with each lid 3 being suitable for a particular food preparation program. Moreover, in further alternative embodiments, for instance, the food preparation device 1 may be equipped with one lid 3 having a plurality of attachments and/or accessories including, but not limited to, the steam release vent 7, the pressure release valve 8, the pressure gauge 9 and/or the like that may be opened and/or shut by the operator and/or the cooking controller 40.

Moreover, the food preparation device 1 may include an interface panel 6. The interface panel 6 may be the mechanism by which instructions are provided to the operator, and the mechanism by which feedback is provided to the operator regarding cooking process status, options and/or the like. In this regard, the interface panel 6 may be a graphical user interface (GUI) that is easily programmed by the user according to unique usage demands of a particular foodservice establishment. In an example embodiment, the interface panel 6 may include a touch screen display capable of providing visual indications to an operator and further capable of receiving touch inputs from the operator. In certain example embodiments, the interface panel 6 may display preprogrammed recipes and cycles from which the operator may select a food preparation program. In other examples, the interface panel 6 may include a simple interface of buttons, lights, dials and/or the like. In further examples, an operator may remotely control the interface panel 6 from a mobile electronic device including, but not limited to, a smartphone, a tablet, a laptop and/or the like.

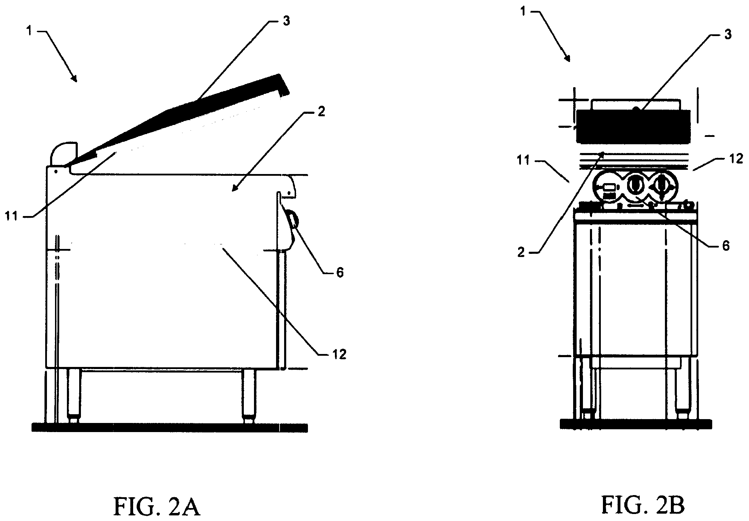

FIGS. 2A and 2B illustrate a food preparation device 1 according to an example embodiment. Specifically, FIG. 2A illustrates a side view of a food preparation device according to an example embodiment, and FIG. 2B illustrates a front view of a food preparation device according to an example embodiment. As shown in FIGS. 2A and 2B, the food preparation device 1 may include an RF capacitive heating source comprising a High Voltage (HV) plate 11 (or anode plate) and a ground plate 12 (or low voltage plate) in addition to a liquid, the temperature and circulation of said liquid being controlled by a liquid temperature control assembly 20. However, it should be appreciated that additional energy sources may also be provided in some embodiments, and some embodiments may only employ a single energy source.

As previously mentioned, the RF capacitive heating source may include the High Voltage (HV) plate 11 or an anode plate (i.e. upper electrode) and a ground plate 12 (i.e. lower electrode, cathode plate or low voltage plate). Both the High Voltage (HV) plate 11 and the ground plate 12 may be flat, horizontal plates situated substantially parallel to each other. In certain embodiments and as shown in FIG. 2A, for example, the High Voltage (HV) plate 11 and the ground plate 12 may extend in parallel planes that are substantially perpendicular to the side walls of the basin 2 such that one of the High Voltage (HV) plate 11 or the ground plate 12 is disposed within the lid and the remaining plate is positioned at the bottom of the basin 2. In other embodiments and as shown in FIG. 2B, however, the High Voltage (HV) plate 11 and the ground plate 12 may extend in parallel planes that are substantially parallel to the side walls of the basin 2. In other example embodiments, the High Voltage (HV) (i.e. upper electrode) plate 11 and the ground plate 12 (i.e. lower electrode or cathode plate) may be flexible molded or formed electrodes that envelope or compose a vessel in which the food product is placed during thawing and/or cooking. In further example embodiments, the electrodes 11, 12 may be flexible molded or formed electrodes that envelope, line, or compose the basin 2. Because the High Voltage (HV) plate 11 and the ground plate 12 may be positioned in various locations within the basin 2 in alternative embodiments, in some example embodiments, at least one of the High Voltage (HV) plate 11 or the ground plate 12 may be submerged in liquid during use of the food preparation device 1. Thus, it should be appreciated that high voltage and ground plates could be positioned in top/bottom, front/back, or right side/left side configurations in any desirable order or arrangement including some combination arrangements in certain examples.

In some embodiments, the RF capacitive heating source transmits RF energy from about 10 MHz to about 50 MHz. For example, RF energy at the 13MHz, 27 MHz, or 41 MHz frequency may be transmitted from the High Voltage (HV) plate 11 to the ground plate 12, although other frequencies in the RF and microwave spectrum are also possible for direct or indirect integration with the RF capacitive heating source. A food product of any size, shape, mass, or composition may be placed in the basin 2. After the food product is situated between the High Voltage (HV) plate 11 and the ground plate 12 in the sufficiently sealed basin 2 to prevent electromagnetic leakage, a power source (not shown) may be activated that generates an oscillating electromagnetic field at either 13MHz or 27MHz or 41MHz (frequency is based upon the system's particular design). The electrical signal may be provided through an impedance matching device (not shown) to generate the oscillating electromagnetic field between the High Voltage (HV) plate 11 and the ground plate 12, through the food product. The oscillating electromagnetic field between the two plates 11, 12 is very uniform as a direct consequence of the food preparation device 1 design and thereby offers much utility to food processing applications where the control of food products' volumetric thermal conditions is of the utmost importance (e.g. thawing and cooking applications).

When energy is transmitted from the High Voltage (HV) plate 11 through the food product to the ground plate 12, some energy may be absorbed by the food product, some energy may be reflected away from the food product, and some energy may be received by the ground plate 12. As a mass of food product (e.g., frozen food product) absorbs energy, its thermal conditions and physical properties change (e.g., energy absorption causes frozen the food product to thaw, transforming ice crystals into water). As the food product thaws, for example, the impedance properties of the food product within the oscillating electromagnetic field between the High Voltage (HV) plate 11 and the ground plate 12 changes and therefore so does the relationship between the power which is absorbed by the food product, reflected, or received into the ground plate 12. This changing relationship may be an ongoing occurrence which transpires continuously during the operation of the food preparation device 1. As the most desirable thawing results are those which are achieved through careful management of the power running through the food preparation device 1, for instance, the impedance matching device (not shown) and its respective electronic control may allow the food preparation device 1 to automatically adjust in real-time to the changing electrical impedance of the food product as it transitions, for example, from frozen to thawed or from raw to cooked. By including both the liquid and the RF capacitive heating source, for example, in thawing applications cooled liquid circulated inside the basin 2 may control and/or slow the rate of thawing at the exterior surface of the food product in order to mitigate thermal runaway at the exterior surface while the food product interior core is being thawed via the RF capacitive heating source 10. In this regard, for instance, the food product may be evenly thawed from the exterior surface to the interior core. Moreover, in cooking applications, for instance, heated liquid circulated inside the basin 2 may rapidly heat the exterior surface of the food product while the RF capacitive heating source 10 may rapidly heat the interior of the food product. In this regard, for example, the food product may be evenly and rapidly cooked from the exterior surface to the interior core.

As discussed above, the basin 2 should be sufficiently sealed to prevent electromagnetic leakage. In this regard, in an example embodiment the basin 2 and/or lid 3 may be provided with, for example, a choke assembly, insulation, RF shielding and/or the like (not shown) to prevent leakage of RF energy generated within the basin 2 to areas external to the food preparation device 1. In such embodiments, for example, the choke assembly, insulation, RF shielding and/or the like may extend around the walls of the basin 2 and/or the perimeter of the lid 3 to coincide with the top of the basin 2. Thus, when the lid 3 is closed, the walls of the basin 2, the lid 3, and the choke assembly, insulation, RF shielding and/or the like may combine to contain RF energy and inhibit or prevent RF leakage.

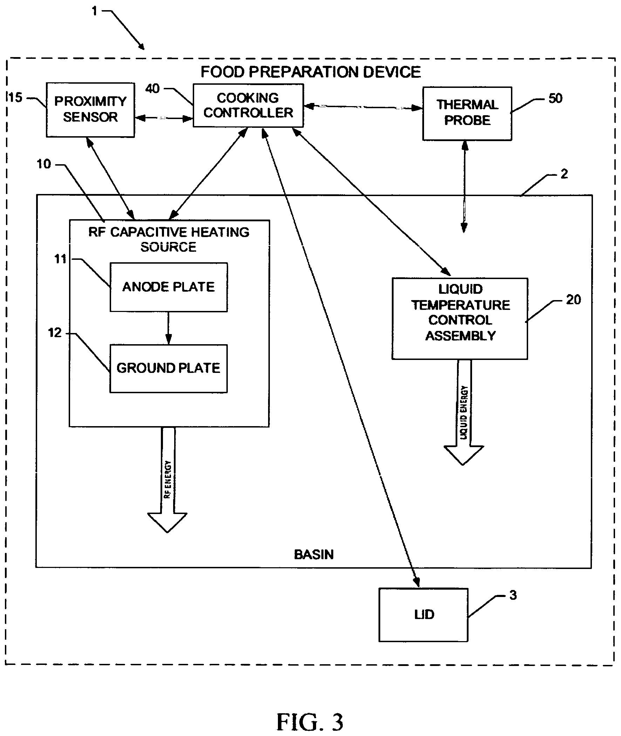

FIG. 3, for example, illustrates a functional block diagram of the food preparation device 1 according to an example embodiment. As shown in FIG. 3, the food preparation device 1 may include at least an RF capacitive heating source 10 and a liquid temperature control assembly 20. In an example embodiment, the first energy source 10 may be an RF capacitive heating source having the High Voltage (HV) plate 11 and the ground plate 12 as discussed herein. Both the High Voltage (HV) plate 11 and the ground plate 12 may be flat, horizontal plates situated substantially parallel to each other and at least one of the plates may be mobile along an axis (e.g., vertical axis). To take advantage of the fact that the High Voltage (HV) plate 11 and the ground plate 12 are mobile, the food preparation device 1 may optionally include a proximity sensor 15. In example embodiments having the optional proximity sensor, the proximity sensor 15 may be configured to sense the precise physical location of a food product within the basin 2 and/or a distance between the High Voltage (HV) plate 11 and the ground plate 12. By having knowledge of the distance between the anode plate 11 and the ground plate 12 via the proximity sensor 15, it may be possible to automatically mechanically position at least one of the plates via a cooking controller 40 according to settings pre-programmed into the cooking controller 40 without reliance on the operator. The proximity sensor 15 may be configured to detect objects in an electric field using an integrated circuit that generates a low-frequency sine wave. The low-frequency sine wave may be adjustable by using an external resistor, optimized for 120 kHz, and may have very low harmonic content to reduce harmonic interference. The proximity sensor 15 may also include support circuits for a microcontroller unit to allow the construction of a two-chip E-field system. In this regard, the proximity sensor 15 (and its associated software functionality) may eliminate the need for an operator to engage in the accurate or precise positioning of the High Voltage (HV) plate 11 and/or the ground plate 12 relative to the shape, size, and/or physical location of the food product by automating such functionality.

According to an example embodiment, the liquid temperature control assembly 20 may control and/or maintain the temperature of the liquid in the basin 2 and circulate the liquid in the basin 2. In some embodiments, for example, the liquid temperature control assembly 20 may comprise an immersion circulator or any other suitable means of circulating and/or regulating liquid temperature in the basin 2 for the food preparation device 1 as understood by one of ordinary skill in the art. Moreover, the liquid used in conjunction with the food preparation device 1 may be any food-safe, non-electrically-conductive liquid including glycol, distilled water, deionized water, broth, soup, stew, wine and/or the like.

In an example embodiment, the RF capacitive heating source 10 may be employed to cook (or thaw) the interior core of the food product while the exterior surface of the food product cooks (or is thawed or otherwise temperature controlled) simultaneously via the liquid and the liquid temperature control assembly 20. However, it should be appreciated that additional energy sources may also be provided in some embodiments and, as stated above, some embodiments may only employ a single energy source. Either simultaneously with the application of RF capacitive heat energy, before the application of RF capacitive heat energy, or after the application of RF capacitive heat energy, the liquid and the liquid temperature control assembly 20 may apply heat to the exterior surface of the food product in order to cook the exterior surface by, for example, sous vide cooking, braising, pressure cooking and/or the like.

In an example embodiment, the RF capacitive heating source 10 and the liquid temperature control assembly 20 may be controlled, either directly or indirectly, by the cooking controller 40. In this regard, the cooking controller 40 may be operably coupled to the RF capacitive heating source 10 and the liquid temperature control assembly 20 to selectively distribute power to the RF capacitive heating source 10 and the liquid temperature control assembly 20. Moreover, it should be appreciated that either or both of the RF capacitive heating source 10 and the liquid temperature control assembly 20 may be operated responsive to settings or control inputs that may be provided at the beginning, during, or at the end of a program cooking cycle. Furthermore, energy delivered via either or both of the RF capacitive heating source 10 and the liquid temperature control assembly 20 may be displayable via operation of the cooking controller 40. The cooking controller 40 may be configured to receive inputs descriptive of the food product and/or cooking conditions in order to provide instructions or controls to the RF capacitive heating source 10 and the liquid temperature control assembly 20 to control the cooking process. The RF capacitive heating source 10 may be said to provide heating of the food product interior core, while the liquid temperature control assembly 20 provides cooling of the food product exterior surface to prevent thermal runaway that might otherwise occur at the exterior surface due to the operation of the RF capacitive heating source 10 in thawing applications and heating of the food product exterior surface in cooking applications.

In an example embodiment, the food preparation device 1 may further include a thermal probe 50 operably coupled to the cooking controller 40 to detect thermal conditions in the basin 2 including, but not limited to, sensing the internal temperature of a food product while the food product is being treated with RF energy. By way of example only, the thermal probe 50 may be a wireless thermal probe using an RF excitation-detection technique with nuclear magnetic resonance (NMR). In such example embodiments, the thermal probe 50 may include a quartz-crystal resonator with high temperature sensitivity (i.e. 88 ppm/°C). In this regard, changes in the quartz resonance frequency reflecting temperature variations are detected by an NMR coil multiply tuned to the resonance frequencies of the quartz crystal and the nuclei of interest. The thermal probe 50 may measure temperature changes from about -60°F to about 305°F because the high frequency linearity of the thermal probe 50 in this temperature region ensures a simple calibration procedure and a constant temperature resolution. However, the thermal probe 50 is not limited to the wireless thermal probe using an RF excitation-detection technique with NMR but may be any suitable thermal probe for use with food preparation device 1 as understood by one of ordinary skill in the art.

In an example embodiment, the cooking controller 40 may be any means such as a device or circuitry embodied in either hardware, or a combination of hardware and software that is configured to execute (or provide instructions for execution of) a strategic control over power distribution to at least the RF capacitive heating source 10 and the liquid temperature control assembly 20. In this regard, the cooking controller 40 is configured to control volumetric thermal conditions of at least one of the food product or the liquid via the RF capacitive heating source 10 and the liquid temperature control assembly 20 according to a selected food preparation program. Moreover, to this end, the cooking controller 40 may be configured to provide continuous or discontinuous on/off cycles in accordance with the selected food program.

Each food preparation programmed into the cooking controller 40 may include preprogrammed settings relating to, for example, humidity, temperature, time, pressure, RF energy and/or the like, and, as such, in some embodiments, the cooking controller 40 may monitor at least one of humidity, temperature, time, pressure, RF energy or any combination thereof. In certain example embodiments, the cooking controller 40 may be configured to provide at least two timing functions. In this regard, a first timing function may define a submergence time for the food product in the liquid in the basin 2, while a second timing function may define an RF energy application time for applying the RF energy to the food product. In some example embodiments, the RF energy application time may be less than the submergence time. Moreover, the RF energy application time could be continuous or discontinuous such that the RF energy application can be strategically applied to a core of the food product while the fluid continuously acts on the surface of the food product.

As such, in some cases, every cooking feature may be defined by the selected food preparation program. Such food preparation programs may be selected from a preprogrammed food preparation program or may be created by an operator. For example, to create a food preparation program, an operator may enter, for instance, the type of food product, the weight of the food product, the desired cooking method (e.g., sous vide, braising, pressure cooking, etc.), or any other suitable factors for designing a food preparation program into the food preparation device 1 via the interface panel 6. Such operator-designed food preparation programs may be saved and programmed into the cooking controller 40 by the operator for further use at a later time or may be used only once and discarded by the cooking controller 40 depending on operator preferences.

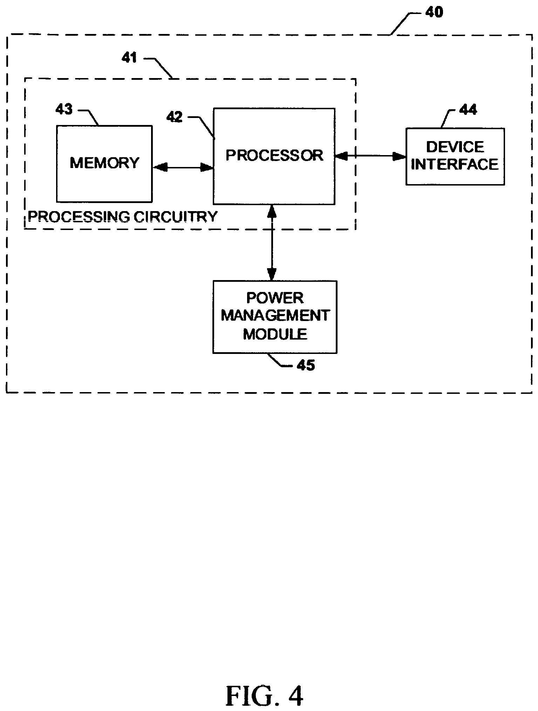

FIG. 4 illustrates a block diagram of the cooking controller 40 in accordance with an example embodiment. In this regard, as shown in FIG. 4, the cooking controller 40 may include processing circuitry 41 that may be configured to interface with, control or otherwise coordinate the operations of various components or modules described herein in connection with controlling power distribution to the at least two energy sources as described herein. The cooking controller 40 may utilize the processing circuitry 41 to provide electronic control inputs to one or more functional units of the cooking controller 40 to receive, transmit and/or process data associated with the one or more functional units and perform communications necessary to enable performance of an operator-selected food preparation program as described herein.

In some embodiments, the processing circuitry 41 may be embodied as a chip or chip set. In other words, the processing circuitry 41 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 41 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 41 may include one or more instances of a processor 42 and memory 43 that may be in communication with or otherwise control a device interface 44. As such, the processing circuitry 41 may be embodied as a circuit chip (e.g., an integrated circuit chip) configured (e.g., with hardware, software or a combination of hardware and software) to perform operations described herein.

The device interface 44 may include one or more interface mechanisms for enabling communication with other components or devices (e.g., the interface panel 6). In some cases, the device interface 44 may be any means such as a device or circuitry embodied in either hardware, or a combination of hardware and software that is configured to receive and/or transmit data from/to devices or components in communication with the processing circuitry 41 via internal and/or external communication mechanisms. Accordingly, for example, the device interface 44 may further include wired and/or wireless communication equipment for at least communicating with the at least two energy sources, and/or other components or modules described herein.

The processor 42 may be embodied in a number of different ways. For example, the processor 42 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 42 may be configured to execute instructions stored in the memory 43 or otherwise accessible to the processor 42. As such, whether configured by hardware or by a combination of hardware and software, the processor 42 may represent an entity (e.g., physically embodied in circuitry - in the form of processing circuitry 41) capable of performing operations according to embodiments of the present invention while configured accordingly. Thus, for example, when the processor 42 is embodied as an ASIC, FPGA or the like, the processor 42 may be specifically configured hardware for conducting the operations described herein. Alternatively, as another example, when the processor 42 is embodied as an executor of software instructions, the instructions may specifically configure the processor 42 to perform the operations described herein in reference to execution of an example embodiment.

In an exemplary embodiment, the memory 43 may include one or more non-transitory memory devices such as, for example, volatile and/or non-volatile memory that may be either fixed or removable. The memory 43 may be configured to store information, data, applications, instructions or the like for enabling the processing circuitry 41 to carry out various functions in accordance with exemplary embodiments of the present invention. For example, the memory 43 may be configured to buffer input data for processing by the processor 42. Additionally or alternatively, the memory 43 may be configured to store instructions for execution by the processor 42. As yet another alternative or additional capability, the memory 43 may include one or more databases that may store a variety of data sets or tables useful for operation of the modules described below and/or the processing circuitry 41. Among the contents of the memory 43, applications or instruction sets may be stored for execution by the processor 42 in order to carry out the functionality associated with each respective application or instruction set. In some cases, the applications/instruction sets may include instructions for carrying out some or all of the operations described in reference to algorithms or flow charts for directing control over power distribution and/or various components of the food preparation device 1 as described herein. In particular, the memory 43 may store executable instructions that enable the computational power of the processing circuitry 41 to be employed to improve the functioning of the cooking controller 40 relative to the control over the at least two energy sources as described herein. As such, the improved operation of the computational components of the cooking controller 40 transforms the cooking controller 40 into a more capable power distribution control device relative to the at least two energy sources and/or food preparation device 1 associated with executing example embodiments.

As shown in FIG. 4, the cooking controller 40 may further include (or otherwise be operably coupled to) a power management module 45. In some examples, the processor 42 (or the processing circuitry 41) may be embodied as, include or otherwise control various modules (e.g., the power management module 45) that are configured to perform respective different tasks associated with the cooking controller 40. As such, in some embodiments, the processor 42 (or the processing circuitry 41) may be said to cause each of the operations described in connection with the power management module 45 as described herein.

The power management module 45 may be any means such as a device or circuitry embodied in either hardware, or a combination of hardware and software that is configured to execute control over the distribution of power to the RF capacitive heating source 10 and the liquid temperature control assembly 20. In this regard, the power management module 45 may be configured to receive cooking information (e.g., from a user via the interface panel 6) regarding the food product or a cooking mode or program to be executed. Based on the cooking information provided, the power management module 45 may select a power distribution algorithm from among a plurality of stored power distribution algorithms. The selected power distribution algorithm may then be executed to provide power to the desired energy sources at desirable times, power levels, sequences and/or the like.

In an example embodiment, the power management module 45 may include a plurality of stored algorithms, each of which defines a corresponding pattern (e.g., predetermined or random) for power distribution to the RF capacitive heating source 10 and the liquid temperature control assembly 20. In some cases, the stored algorithms may be associated with corresponding different cooking programs, cooking modes, or such algorithms may be named and selectable by the user from a menu. Regardless of how selected, once the power management module 45 selects an algorithm, the selected power distribution algorithm may be executed by the processing circuitry 41, which ultimately provides for control inputs to be provided to the RF capacitive heating source 10 and the liquid temperature control assembly 20.

In some embodiments, the cooking controller 40 (and/or the power management module 45) may be configured to receive static and/or dynamic inputs regarding the food product and/or cooking conditions. Dynamic inputs may include feedback data regarding absorption of RF spectrum, as described above. In some cases, dynamic inputs may include adjustments made by the operator during the cooking process. The static inputs may include parameters that are input by the operator as initial conditions. For example, the static inputs may include a description of the food type, initial state or temperature, final desired state or temperature, a number and/or size of portions to be cooked and/or the like.

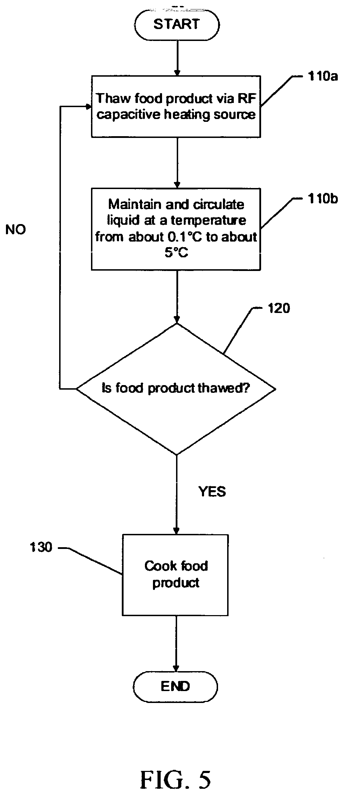

FIGS. 5-7 illustrate examples of how the cooking controller 40 controls volumetric thermal conditions of a food product according to example embodiments. It should be understood that the cooking controller 40 operates to interact with and control other functional units of the food preparation device 1. As such, when various functions or activities are attributed to the cooking controller 40 herein, it should be further appreciated that such functions or activities may be performed via the exercising of control over other components.

FIG. 5, for example, illustrates a control flow diagram of one example of how the cooking controller 40 thaws a food product in accordance with an example embodiment. As shown in FIG. 5, the cooking controller 40 utilizes a sous vide process to thaw a food product via the RF capacitive heating source 10 at operation 110a and maintaining and circulating the liquid at a temperature from about 0.1°C to about 5°C via the liquid temperature control assembly 20 at operation 110b. While operations 110a and 110b appear in series in FIG. 5, it may be understood that operations 110a and 110b may occur sequentially, in reverse, or simultaneously. In this regard, the food product may be rapidly and uniformly thawed without partial cooking in order to maintain natural moisture and inherent food product quality. The cooking controller 40 then determines whether the food product has thawed at operation 120. This may be determined based on programs defining thawing strategies or predefined times and/powers for given food product size, weight, shape, food type, etc. If the food product interior core has thawed, then the cooking controller 40 may cook the food product at operation 130. Moreover, the food product may be immediately consumed. However, if the food product interior core has not thawed, then the cooking controller 40 may continue to thaw the food product via the RF capacitive heating source 10 while maintaining and circulating the liquid at a temperature from about 0.1°C to about 5°C via the liquid temperature control assembly 20 at operations 110a and 110b, respectively. As such, the cooking controller 40 may repeat the entire process illustrated in FIG. 5 as needed. In this regard, the surface temperature of a food product submerged in a cold liquid bath may be held down via the liquid temperature control assembly 20 while the food product receives energy from the RF capacitive heating source 10. As the core temperature of the food product increases, the liquid temperature also increases via the liquid temperature control assembly 20 in order to facilitate volumetric uniform thawing. Moreover, the food preparation device 1 may be capable of preparing multiple food products at once depending on the size of the basin 2. As such, the efficiency of thawing one or more food products may be substantially increased.

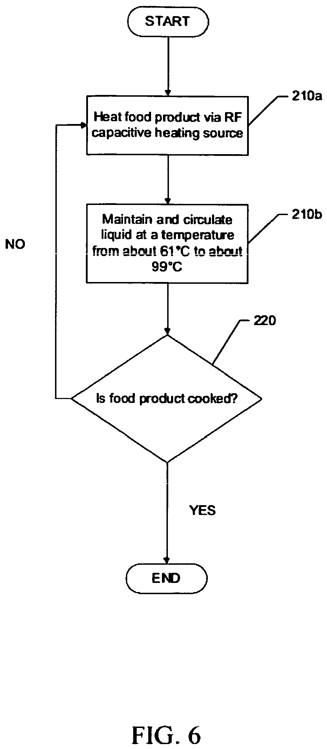

FIG. 6, for instance, illustrates a control flow diagram of one example of how the cooking controller 40 sous vide cooks a food product in accordance with an example embodiment. As shown in FIG. 6, the cooking controller 40 heats a food product via the RF capacitive heating source 10 at operation 210a and maintaining and circulating the liquid at a temperature from about 61°C to about 99°C via the liquid temperature control assembly 20 at operation210b. While operations 210a and 210b appear in series in FIG. 6, it may be understood that operations 210a and 210b may occur sequentially, in reverse, or simultaneously. In this regard, the food product may be rapidly and uniformly cooked via sous vide cooking in order to maintain natural moisture and inherent food product quality. The cooking controller 40 then determines whether the food product has cooked at operation 220. If the food product has cooked sufficiently, then the food product may be immediately consumed. However, if the food product has not sufficiently cooked, then the cooking controller 40 may continue to cook the food product via the RF capacitive heating source 10 while maintaining and circulating the liquid at a temperature from about 61°C to about 99°C via the liquid temperature control assembly 20 at operations 210a and 210b respectively. As such, the cooking controller 40 may repeat the entire process illustrated in FIG. 6 as needed. In this regard, a food product may be uniformly heated from interior to exterior via the heated liquid and applied RF energy.

For example, in sous vide applications (e.g., thawing, cooking and/or the like), the food product may be sealed (e.g., vacuum sealed) within a non-permeable, RF energy-transparent vessel in the basin 2. The non-permeable, RF energy-transparent vessel may include a non-permeable plastic vacuum bag, a rigid vessel made of materials which are substantially transparent to RF energy (e.g., glass, ceramic, plastic, silicone, etc.) and/or the like. Moreover, in such example embodiments utilizing sous vide capabilities, the lid 3 may, for instance, be perforated so as to include steam release vents 7.

In contrast to sous vide applications, however, in pressure cooking and/or braising applications, the food product may be directly submerged in and/or in contact with the liquid. Moreover, in such example embodiments utilizing pressure cooking or braising capabilities, the lid 3 may, for example, be a heavy duty, non-perforated lid 3 that fits tightly to the basin 2 along a gasket and locks into place to contain the steam and pressure that accumulates in the basin 2 during the cooking process. The lid may also include at least one of a pressure valve 8, a pressure gauge 9, or any combination thereof to monitor and/or release pressure as necessary throughout the cooking process. In pressure cooking applications, for example, at least one of the pressure valve 8 and the pressure gauge 9 may be operably coupled to the cooking controller 40 such that the cooking controller 40 maintains the pressure in the basin 2 at about 15 psi. In this regard, the food preparation device 1 may reduce cooking times, preserve the flavor and nutritional value of the food product, reduce energy consumption compared to protracted conventional cooking methods and/or the like.

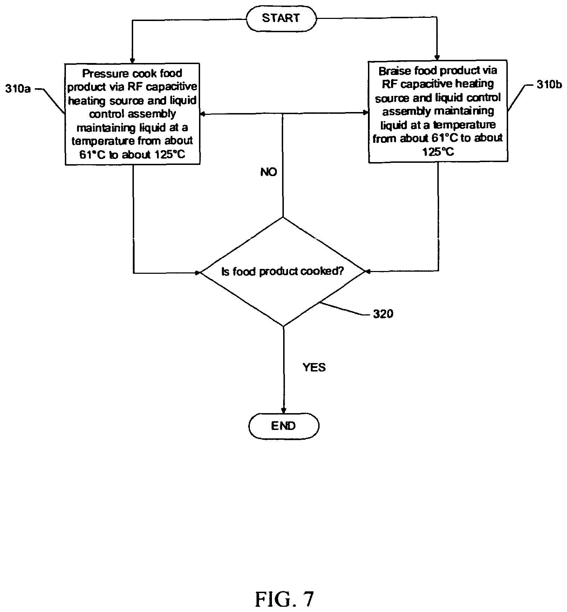

FIG. 7, for example, illustrates a control flow diagram of one example of how the cooking controller 40 braises or pressure cooks a food product in accordance with an example embodiment. As shown in FIG. 7, depending on the operator-selected food preparation program, the cooking controller 40 either pressure cooks a food product via the RF capacitive heating source 10 and maintains the liquid at a temperature from about 61°C to about 125°C via the liquid temperature control assembly 20 at operation 310a, or braises the food product via the RF capacitive heating source 10 and maintains the liquid at a temperature from about 61°C to about 125°C via the liquid temperature control assembly 20 at operation 310b. The cooking controller 40 then determines whether the food product has cooked at operation 320. If the food product has cooked sufficiently, then the food product may be immediately consumed. However, if the food product has not sufficiently cooked, then the cooking controller 40 may continue to either pressure cook or braise the food product via the RF capacitive heating source 10 while maintaining and circulating the liquid at a temperature from about 61°C to about 125°C via the liquid temperature control assembly 20 at operation 310a or 310b respectively depending upon the food preparation program selected by the operator. As such, the cooking controller 40 may repeat the entire process illustrated in FIG. 7 as needed.

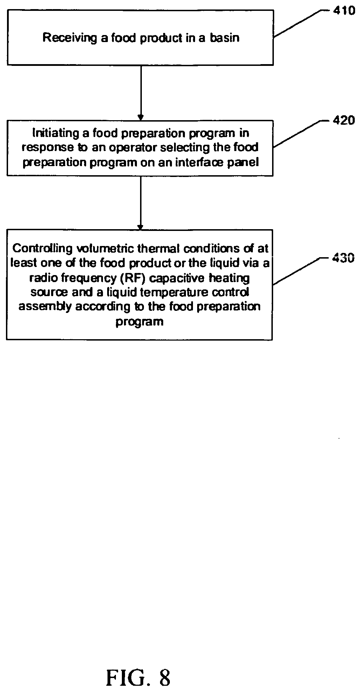

In another aspect, a method of preparing food with a food preparation device is provided. The method may include receiving a food product in a basin configured to contain a liquid, initiating a food preparation program in response to an operator selecting the food preparation program on an interface panel, and controlling volumetric thermal conditions of at least one of the food product or the liquid via an RF capacitive heating source and a liquid temperature control assembly according to the food preparation program. The food preparation device may further comprise a lid hingedly attached to the basin, the lid being configured to have a function related to the food preparation program. The RF capacitive heating source may comprise a ground plate and an anode or High Voltage (HV) plate disposed on opposing surfaces of the basin. FIG. 8, for example, illustrates a block diagram of a method of preparing food in accordance with an example embodiment. As shown in FIG. 8, the method receiving a food product in a basin at operation 410, initiating a food preparation program in response to an operator selecting the food preparation program on an interface panel at operation 420, and controlling volumetric thermal conditions of at least one of the food product or the liquid via an RF capacitive heating source and a liquid temperature control assembly according to the food preparation program at operation 430.

Example embodiments may provide a food preparation device capable of providing even thawing of a food product from the exterior surface to the interior core by thawing the interior core with an RF capacitive heating source while cooling the exterior surface with a cooled liquid via sous vide thawing. Moreover, the food preparation device may improve and simplify food preparation while reducing cooking times by providing various operator-selectable recipes and cycles to further prepare the food product via methods including, but not limited to, sous vide cooking, braising, pressure cooking and/or the like.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A food preparation device comprising:
a radio frequency (RF) capacitive heating source;
a liquid temperature control assembly;
a cooking controller operably coupled to the RF capacitive heating source and the liquid temperature control assembly to selectively distribute power to the RF capacitive heating source and the liquid temperature control assembly;
a basin configured to contain a liquid and receive a food product; and
a lid hingedly attached to the basin, the lid being configured to have a function related to a selected food preparation program,
wherein the RF capacitive heating source comprises a ground plate and a high voltage plate disposed on opposing surfaces of the basin.

2. The food preparation device of claim 1, wherein each of the lid and the basin are configured to contain RF energy via at least one of RF shielding, RF insulation, or any combination thereof.

3. The food preparation device of claim 1 or 2, wherein the ground plate and the high voltage plate extend in parallel planes that are substantially parallel to side walls of the basin.

4. The food preparation device of one of the preceding claims, wherein the ground plate and the anode plate extend in parallel planes that are substantially perpendicular to side walls of the basin such that one of the ground plate or the high voltage plate is disposed within the lid.

5. The food preparation device of one of the preceding claims, wherein the lid comprises at least one of a pressure release valve, a pressure gauge, a steam release vent, or any combination thereof.

6. The food preparation device of one of the preceding claims, wherein the cooking controller monitors at least one of humidity, temperature, time, pressure, RF energy, or any combination thereof, and wherein the cooking controller is configured to provide at least a first timing function and a second timing function, the first timing function defining a submergence time for the food product in the liquid, and the second timing function defining an RF energy application time for applying the RF energy to the food product,
wherein the RF energy application time is less than the submergence time.

7. The food preparation device of one of the preceding claims, wherein the cooking controller is configured to provide continuous or discontinuous on/off cycles in accordance with the selected food preparation program.

8. The food preparation device of one of the preceding claims, wherein the liquid temperature control assembly controls the temperature of the liquid and circulates the liquid in the basin.

9. The food preparation device of one of the preceding claims, wherein the selected food preparation program comprises at least one of sous vide thawing, sous vide cooking, or any combination thereof,
wherein when the selected food preparation program comprises sous vide thawing, the cooking controller is configured to rapidly thaw the food product via the RF capacitive heating source and the liquid temperature control assembly, such that the liquid is maintained at a temperature from about 0.1°C to about 5°C, or
when the selected food preparation program comprises sous vide cooking, the cooking controller is configured to rapidly cook the food product via the RF capacitive heating source and the liquid temperature control assembly, such that the liquid is maintained at a temperature from about 61°C to about 99°C.

10. The food preparation device of claim 9, wherein the food product is sealed within a non-permeable, RF energy-transparent vessel in the basin, and the lid comprises a steam release vent.

11. The food preparation device of one of claims 1 to 8, wherein the selected food preparation program comprises braising or pressure cooking, wherein the cooking controller is configured to rapidly cook the food product via the RF capacitive heating source and the liquid temperature control assembly, such that the liquid is maintained at a temperature from about 61°C to about 125°C, and/or
wherein when the selected food preparation program comprises pressure cooking, the pressure is maintained at about 15 psi.

12. The food preparation device of claim 11, wherein the food product is directly submerged in the liquid, and the lid comprises a non-perforated lid having at least one of a pressure valve, a pressure gauge, or any combination thereof.

13. The food preparation device of one of the preceding claims, further comprising a thermal probe operably coupled to the cooking controller, the thermal probe being configured to detect thermal conditions in the basin.

14. The food preparation device of one of the preceding claims, further comprising an interface panel.

15. A method of preparing food in a food preparation device, comprising:
receiving a food product in a basin, the basin being configured to contain a liquid;
initiating a food preparation program in response to an operator selecting the food preparation program on an interface panel; and
controlling volumetric thermal conditions of at least one of the food product or the liquid via a radio frequency (RF) capacitive heating source and a liquid temperature control assembly according to the food preparation program,
wherein the food preparation device further comprises a lid hingedly attached to the basin, the lid being configured to have a function related to the food preparation program, and
wherein the RF capacitive heating source comprises a ground plate and a high voltage plate disposed on opposing surfaces of the basin.
